# Europäisches Patentamt

## European Patent Office

## Office européen des brevets

(19)

(11) Veröffentlichungsnummer: **0 046 281**
**B1**

(12) **EUROPÄISCHE PATENTSCHRIFT**

(45) Veröffentlichungstag der Patentschrift:
05.11.86

(51) Int. Cl.⁴: **C 03 C 13/00**, G 02 B 6/18

(21) Anmeldenummer: **81106340.3**

(22) Anmeldetag: **14.08.81**

(54) **Verfahren zum Herstellen von Glas mit einem vorbestimmten Brechzahlprofil in Form eines Gradientenprofils und zum Erzeugen einer Vorform aus Glas zum Ziehen von Lichtleitfasern für die Nachrichtentechnik.**

(30) Priorität: **18.08.80 DE 3031147**

(43) Veröffentlichungstag der Anmeldung:
**24.02.82 Patentblatt 82/8**

(45) Bekanntmachung des Hinweises auf die Patenterteilung:
**05.11.86 Patentblatt 86/45**

(84) Benannte Vertragsstaaten:
**AT BE CH FR GB IT LI NL SE**

(56) Entgegenhaltungen:
**EP-A-0 028 155**
**DE-A-2 536 457**
**DE-A-2 627 821**
**FR-A-2 432 478**

(73) Patentinhaber: **Siemens Aktiengesellschaft Berlin und München, Wittelsbacherplatz 2, D-8000 München 2 (DE)**

(72) Erfinder: **Schneider, Hartmut, Dr., Blütenstrasse 12, D-8000 München 40 (DE)**
Erfinder: **Lebetzki, Egon, Riemerschmidtstrasse 32, D-8000 München 45 (DE)**

## Beschreibung

Die vorliegende Erfindung betrifft ein Verfahren zum Herstellen von Glas mit einem vorbestimmten Brechzahlprofil in Form eines Gradientenprofils nach dem Oberbegriff des Patentanspruchs 1.

Ein Verfahren der genannten Art ist aus der DE-A-26 27 821 bekannt. Bei diesem Verfahren wird das parabelförmige Gradientenprofil in einer Deckschicht durch Dotierung mit Fluor erzeugt, die entsprechend dem Gradientenprofil schichtweise allmählich verändert wird.

Verfahren, bei denen ebenfalls auf einem Körper eine oder mehrere Glasschichten aus der Gasphase unter thermischer Reaktionseinleitung abgeschieden werden, und bei denen mit Fluor dotiert wird, gehen aus der FR-A-24 32 478 und der EP-A-00 28 155 hervor. Diese Verfahren dienen zum Herstellen von Glas mit einem vorbestimmten Brechzahlprofil in Form eines gestuften Profils.

Bei Lichtwellenleitern für die optische Nachrichtentechnik liegt ein Hauptziel darin, eine möglichst niedrige Dämpfung und Impulsverbreiterung zu erreichen. Für eine niedrige Dämpfung ist eine gute Homogenität des Glases Voraussetzung und eine niedrige Impulsverbreiterung kann dadurch erreicht werden, daß dem Kern der Faser, in dem das Licht geführt wird, ein gewisses radiales Brechzahlprofil gegeben wird. Geeignet dafür ist ein im wesentlichen parabelförmig verlaufendes Profil. Mit diesem Profil ist es möglich, in Multimode-Glasfasern Laufzeitunterschiede zwischen einzelnen Modengruppen weitgehend auszugleichen, und damit eine Impulsverbreiterung gering zu halten. Das Brechzahlprofil muß dabei sehr exakt eingehalten werden.

Glasfasern mit einem gewünschten Brechzahlprofil im Kernbereich können so hergestellt werden, daß zuerst nach einem Verfahren der eingangs genannten Art ein Glasstab hergestellt wird, der ein der Faser entsprechendes Brechzahlprofil aufweist, und daß aus diesem Stab die Faser gezogen wird, wobei die Gestalt des Brechzahlprofils im Stab in der gezogenen Faser erhalten bleibt.

Glasstäbe mit einem derartigen Brechzahlprofil, beispielsweise einem parabelförmigen Brechzahlprofil, können mit einem bekannten CVD-Verfahren, bei dem Glasschichten auf der Innenwand eines Rohres abgeschieden und das innenbeschichtete Rohr zu einem Stab verformt wird, aus welchem die gewünschte Faser gezogen werden kann, dadurch hergestellt werden, daß eine Vielzahl von Glasschichten mit geringfügig voneinander abweichenden Brechzahlen aufgeschmolzen wird.

Zum Abscheiden der Glasschichten wird ein Reaktionsgasgemisch durch das von außen erhitzte Rohr geleitet. Die chemische Reaktion wird in der Heizzone im Inneren thermisch ausgelöst, wodurch ein die Zusammensetzung eines Glases aufweisendes Pulver entsteht, das sich auf der Innenwand des Rohres abscheidet und das in der Heizzone zu einem Glasfilm klargeschmolzen wird. Über die Zusammensetzung des Reaktionsgasgemisches läßt sich die Brechzahl des abgeschiedenen Glases beeinflussen.

Es hat sich dabei jedoch herausgestellt, daß bei der Herstellung eines gewünschten Brechzahlprofils mit stetigem Verlauf, insbesondere bei einem parabelförmigen Brechzahlprofil Welligkeiten auftreten, dergestalt, daß die einzelnen Schichten in radialer Richtung keine homogene Zusammensetzung mehr aufweisen. Es hat sich weiter herausgestellt, daß diese Inhomogenitäten sich nicht durch eine Erhöhung der Anzahl der abzuscheidenden Glasschichten bei verminderter Schichtdicke beseitigen lassen.

Aufgabe der Erfindung ist es, ein Verfahren zum Herstellen von Glas mit einem vorbestimmten Brechzahlprofil in Form eines Gradientenprofils anzugeben, bei dem das hergestellte Brechzahlprofil frei von unerwünschten Brechzahlschwankungen ist.

Diese Aufgabe wird mit einem Verfahren der eingangs genannten Art nach dem kennzeichnenden Teil des Patentanspruchs 1 dadurch gelöst, daß jede der gemeinsam das Gradientenprofil bestimmenden Schichten mit Fluor und mit zumindest einem anderen Dotierstoff dotiert wird, und daß nur die Dotierung mit dem anderen Dotierstoff verändert, die Dotierung mit Fluor aber für alle Schichten konstant gehalten wird.

Diese Lösung beruht in erster Linie auf der neuen Erkenntnis, daß Fluor auf Konzentrationsschwankungen, die bei einem Verfahren der eingangs genannten Art auftreten, und die für unerwünschte Brechzahlschwankungen verantwortlich sind, dämpfend einwirkt. Die Glättung des Brechzahlprofils wird danach nicht in erster Linie durch die Überlagerung zweier gegenwirkender welliger Konzentrationsprofile erreicht, sondern durch eine echte Dämpfung von Konzentrationsschwankungen.

Bevorzugterweise werden nach Anspruch 2 die Glasschichten in Form von Schichten aus alkalifreiem Quarzglas abgeschieden, die mit Fluor und mit einem oder mehreren anderen Dotierstoffen dotiert sind.

Als besonders zweckmäßig hat es sich dabei herausgestellt, wenn gemäß Anspruch 3 die abgeschiedenen Quarzglasschichten nur mit Germanium und Fluor dotiert sind.

Neben diesem besonders bevorzugten Glas hat es sich als geeignet erwiesen, wenn nach Anspruch 4 eine oder jede abgeschiedene Quarzglasschicht mit Germanium, Aluminium, Titan, Tantal, Zinn, Niob, Zirkonium, Yb, La, Pb und/oder Lb und mit Fluor dotiert ist.

Vorteilhafterweise wird bei dem erfindungsgemäßen Verfahren nach Anspruch 5 so vorgegangen, daß aus einer Reaktionsgasmischung abgeschieden wird, die ein fluorhaltiges Molekülgas und je anderem Dotierstoff ein weiteres Molekülgas enthält, wobei die Konzentration eines weiteren Molekülgases oder das Mischungsverhältnis oder die Zusammensetzung der weiteren Molekülgase schichtweise verändert wird.

Insbesondere kommt als fluorhaltiges Molekülgas gemäß Anspruch 6 ein Gas oder Gasgemisch infrage, das außer Fluor nur Elemente enthält, die selbst oder deren Oxide keine wesentliche Neigung zur Lösung in Glas haben.

Als besonders geeignet hat sich dabei ein fluorhaltiges Molekülgas erwiesen, das gemäß Anspruch 7 ein oder mehrere Schwefelfluorverbindungen, Fluorkohlenwasserstoffe und/oder Stickstofffluorverbindungen enthält.

Insbesondere kann das fluorhaltige Molekülgas gemäß Anspruch 8 ein oder mehrere Schwefelfluoride, Stickstofffluoride, Fluorhalogenkohlenwasserstoffe und/oder Karbonylfluorid enthalten, wobei alle Schwefel und Stickstofffluoride und Fluorhalogen-Kohlenwasserstoffe in Frage kommen.

Als besonders vorteilhaft hat sich gemäß Anspruch 9 Schwefelhexafluorid als fluorhaltiges Molekülgas erwiesen.

Als fluorhaltiges Molekülgas kann gemäß Anspruch 10 auch ein Gas oder Gasgemisch verwendet werden, das neben Fluor auch ein Element enthält, dessen Oxid gut in Glas löslich ist. Dadurch kann gleichzeitig mit der Fluordotierung eine andere erwünschte Dotierung der abzuscheidenden Glasschicht erfolgen.

Besonders geeignet als solches Gas oder Gasgemisch sind gemäß Anspruch 11 Siliziumtetrafluorid, Bortrifluorid und/oder Phosphorpentafluorid. Diese Gase oder Gasgemische können zu $SiO_2$-, $B_2O_3$- und $P_2O_5$-Dotierungen führen.

In den durch ein erfindungsgemäßes Verfahren Glas fungiert das Fluor als Sauerstoffsubstituend und liegt gebunden an dem Stoff oder einem oder mehreren der beiden Stoffe als Fluorid vor.

Bei der Durchführung eines Verfahrens zum Erzeugen einer Vorform aus Glas zum Ziehen von Lichtleitfasern für die optische Nachrichtentechnik durch Kollabieren eines Glasrohres zum Stab, nachdem auf der Innenfläche des Glasrohres eine oder mehrere Glasschichten abgeschieden worden sind, wobei man das Abscheiden der Glasschichten nach einem Verfahren gemäß einem der Ansprüche 1 bis 11 durchführt, wurde gefunden, daß eine $GeO_2$-Konzentrationssenke im Zentrum des Kerns mit einer Halbwertsbreite von nur 60 μm extrem schmal wird, wenn gemäß Anspruch 12 das Kollabieren in Gegenwart von Schwefelhexafluorid vorgenommen wird, mit dem die Innenfläche des Glasrohres während des Kollabierens umspült wird, und das reinigend und ätzend auf das Glas einwirkt.

Vorzugsweise wird dabei gemäß Anspruch 13 das Abscheiden der Glasschichten nach einem Verfahren gemäß der Kombination aus den Ansprüchen 1, 3, 5 und 9 durchgeführt.

Die Erfindung wird anhand eines Ausführungsbeispiels in der nun folgenden Beschreibung, in der auf weitere Vorteile der Erfindung hingewiesen wird, näher erläutert.

Ein Quarzglasrohr von etwa 1 m Länge und 20 mm Durchmesser bei 1,5 mm Wachsstärke wird in einer Glasdrehbank mit Hilfe eines schmalen Knallgasbrenners beheizt. Zunächst wird das Rohr gereinigt. Dazu wird ein Gasstrom, bestehend aus 1100 Nml/min Sauerstoff und 15 Nml/min Schwefelhexafluorid durch das Rohr geleitet (N bedeutet dabei den Bezug auf Normalbedingungen bei 1 Bar unter 0°C). Der Reinigungseffekt wird durch das Schwefelhexafluorid bewirkt, das in der heißen Zone ätzend auf das Glas einwirkt. Der Brenner wird mit einer Geschwindigkeit von 15 cm/min in Richtung des Gasstromes längs des Rohres verschoben und treibt dabei die bei der Ätzung entstehenden Reaktionsprodukte vor sich her. Nach drei Brennerdurchläufen wird mit der Abscheidung von Glasschichten begonnen, die für den Mantel der Glasfaser bestimmt sind. Dazu werden dem Gasstrom 90 Nml/min Siliziumtetrachlorid zugefügt. Die $SF_6$-Zufuhr kann jetzt unterbrochen werden, sie kann aber auch beibehalten werden, allerdings bei einem verminderten Wert, beispielsweise 6 Nml/min. Dann findet vor dem Brenner eine Abscheidung von Quarzglaspulver statt, das mit Fluor dotiert ist und das durch den vorrückenden Brenner zum Glas klargeschmolzen wird.

Nach Abscheidung von zehn derartigen Glasschichten ist die Bildung von Mantelglas abgeschlossen und dem Gasstrom wird $GeCl_4$-Gas und, wenn nicht schon vorhanden, Schwefelhexafluorid, vorzugsweise 6 Nml/min beigemischt und der $GeCl_4$-Gasstrom wird von Brennerdurchlauf zu Brennerdurchlauf und damit von Schicht zu Schicht um etwa 44/60 Nml/min erhöht.

Es sei ausdrücklich darauf hingewiesen, daß der $GeCl_4$-Gasstrom erhöht, der Hexafluoridgasstrom aber konstant gehalten wird.

Nachdem auf diese Art und Weise 60 Glasschichten abgeschieden worden sind, wird die Chloridzufuhr unterbrochen und der Schwefelhexafluoridfluß auf etwa 1,5 1,5 Nml/min vermindert und die Brennergeschwindigkeit verlangsamt, so daß die Rohrtemperatur auf etwa 2000°C steigt. Bei dieser Temperatur beginnt das Rohr zu kollabieren. Dabei findet aufgrund des geringen Schwefelhexafluoridflusses eine geringfügige ätzung und damit Reinigung der Rohrinnenwand statt.

Nach etwa fünf Brennerdurchläufen wird der Gasdurchfluß vollständig unterbunden und das entstandene Kapillarrohr in einem erneuten Brennerdurchlauflückenlos zum Stab verschmolzen.

Der so erzeugte Stab weist einen Außendurchmesser von 11 mm auf. Der Durchmesser des Kerns beträgt 5,2 mm. Im Kern steigt die Germaniumkonzentration radial von außen nach innen von 0 auf 12 Gew.% an. Der Konzentrationsverlauf schmiegt sich eng an ein Paraboloid mit quadrarischer Parabel als Hüllkurve an. Die Fluoridkonzentration beträgt in sämtlichen abgeschiedenen Schichten gleichmäßig etwa 0,6 Gew.-%. Die GeO$_2$-Konzentrationssenke im Zentrum des Kerns ist mit einer Halbwertsbreite von nur 60 μm extrem schmal. Dies wird im wesentlichen durch den während des Kollabierungsvorgangs durch den Schwefelhexafluoridfluß bewirkten Reinigungseffekt erzielt. Das Umspülen der Glaswand mit Schwefelhexafluorid führt danach auch noch zu einem Reinigungseffekt, der sich äußerst günstig auf das herzustellende Glas auswirkt.

Bei sonst gleichen Versuchsbedingungen, jedoch ohne Fluorzusatz zur Gasphase, weist ein GeO$_2$-Profil ausgeprägte Spitzen und eine breite Konzentrationssenke im Zentrum des Kerns auf. Es wurden Schwankungen zwischen Spitzen und Senken von etwa 15 % beobachtet. An einer zwei Kilometer langen Faser aus einer derartigen Vorform mit ausgeprägten Spitzen wurden Impulsbreiten von etwa 2 ns beobachtet. Bei der gleichen Faser mit Fluoridzusatz wurde demgegenüber eine Impulsverbreiterung von lediglich 0,5 ns beobachtet, was einer Bandbreite von 2 GHz/km entspricht. Typische Dämpfungswerte der mit Fluor dotierten Faser sind 0,8 dB/km bei 1,55 /um. Bei 1,39/um wurden 5,5 dB/km (Wassermaximum) gemessen. Ohne Fluorzusatz ist das Wassermaximum höher.

Eine Erklärung für die ohne Fluorzusatz auftretenden relativ hohen Konzentrations- und damit Brechzahlschwankungen scheint in folgender Beobachtung zu liegen. Bei der vorgenommenen Abscheidung aus der Gasphase mit externer Heizung, d.h. thermischer Reaktionseinleitung, findet eine teilweise Entmischung in der entstehenden Glasschicht statt, weil sich das leichter flüchtige Germaniumoxid weiter flußabwärts vor dem davorliegenden Brenner abscheidet und dann von an Germaniumdioxid ärmerem Glas überdeckt wird. Wie schon erwähnt, wurde beobachtet, daß dieser Effekt nicht durch eine Erhöhung der Anzahl der Schichten bei verminderter Schichtdicke zu beseitigen ist, die auch wegen der begrenzten Heizleistung des Brenners weniger attraktiv ist.

Neben der erheblich verringerten Impulsverbreiterung, die auf eine größere Homogenität des mit Fluor verunreinigten Glases hinweist, kann bereits im optischen Mikroskop bechachtet werden, daß Schichten mit Fluorzusatz wesentlich homogener sind, als Schichten ohne Fluorzusatz. Analysen des radialen Konzentrationslaufs mit der Elektronenmikrosonde haben ergeben, daß, wie schon erwähnt, die Glättung des Brechzahlprofils nicht so sehr durch die Überlagerung zwei welliger Konzentrationsprofile, nämlich des Ge- und des F-Profils, zustandekommt, sondern daß das Fluor dämpfend auf das Germaniumprofil wirkt. Letzteres erscheint mit Schwankungen von unter 5 % bereits wesentlich gleichmäßiger, womit die bereits erwähnte deutlich erhöhte Bandbreite solcher Fasern einhergeht. Die bessere Homogenisierung ist auf die Beteilung flüchtiger Si- und Ge-Fluoride zurückzuführen, die einen geringeren Unterschied in ihren Transporteigenschaften besitzen als die Oxide und demzufolge eine gleichmäßigere Abscheidung aus der Gasphase bewirken.

Es darf angenommen werden, daß eine Fluordotierung auch bei anderen Verunreinigungen als Ge, d.h. GeO$_2$, ähnlich günstige Effekte bewirkt. Insbesondere ist dies bei Al$_2$O$_3$, TiO$_2$, Ta$_2$O$_5$, SnO$_2$, Nb$_2$O$_5$, ZrO$_2$, Yb$_2$O$_3$, La$_2$O$_3$, P$_2$O$_5$, B$_2$O$_3$, Sb$_2$O$_5$ anzunehmen.

Wie schon erwähnt, kommen als fluorhaltige Molekülgase in erster Linie Gase in Frage, die außer Fluor nur Elemente enthalten, die oder deren Oxide keine wesentliche Neigung zur Lösung in dem verwendeten Glas, hier SiO$_2$, haben. Neben SF$_6$-und auch anderen Schwefelfluoriden, wie SO$_2$F$_2$, S$_2$F$_2$, SF$_4$, S2F$_{10}$, sind dies insbesondere Fluorkohlenwasserstoffe und Fluorhalogenkohlenwasserstoffe, wie beispielsweise CCl$_2$F$_2$ sowie Stickstofftrifluorid (NF$_3$) und carbonylfluorid (COF$_2$).

Wie ebenfalls schon angedeutct, können aber auch Fluoride von Elementen verwendet werden, deren Oxide gut im Glas, hier Quarzglas, löslich sind. Insbesondere kommen dafür SiF$_4$, BF$_3$ und PF$_5$ in Frage. Diese Stoffe führen zu SiO$_2$-, B$_2$O$_3$- und P$_2$O$_5$-Dotierungen.

Es sei abschließend darauf hingewiesen, daß das vorgeschlagene Verfahren überall dort vorteilhaft anwendbar ist, wo ein gewünschter Brechzahlverlauf durch Abscheidung einer Vielzahl von Glasschichten herzustellen ist.

**Patentansprüche**

1. Verfahren zum Herstellen von Glas mit einem vorbestimmten Brechzahlprofil in Form eines Gradientenprofils, bei welchem zur Erzeugung des Profils auf einem Körper eine oder mehrere Glasschichten aus der Gasphase unter thermischer Reaktionseinleitung abgeschieden werden, wobei jede der gemeinsam das Gradientenprofil bestimmenden Glasschichten mit einem die Brechzahl der Schicht bestimmenden Dotierstoff dotiert wird, wobei die Dotierung schichtweise so bestimmt wird, daß sich von Schicht zu Schicht die Brechzahl allmählich entsprechend dem Gradientenprofil ändert, und wobei mit Fluor dotiert wird, dadurch gekennzeichnet, daß jede der gemeinsam das Gradientenprofil bestimmenden Schichten mit Fluor und mit zumindest einem anderen Dotierstoff dotiert wird, und daß nur die Dotierung mit dem anderen Dotierstoff verändert, die Dotierung mit Fluor aber für alle Schichten konstant gehalten wird.

2. Verfahren nach Anspruch 1, dadurch gekennzeichnet, daß die Glasschichten in Form von Schichten aus alkalifreiem Quarzglas abgeschieden werden, die mit Fluor und einem oder mehreren anderen Dotierstoffen dotiert sind.

3. Verfahren nach Anspruch 2, dadurch gekennzeichnet, daß die abgeschiedenen Quarzglasschichten nur mit Germanium und Fluor dotiert sind.

4. Verfahren nach Anspruch 2, dadurch gekennzeichnet, daß eine oder jede abgeschiedene Quarzglasschicht mit Ge, Al, Ti, Ta, Sn, Nb, Zr, Yb; La, P, B und/oder Sb und mit Fluor dotiert ist. Ed 1 Sti/20.12.1983

5. Verfahren nach einem der vorhergehenden Ansprüche, dadurch gekennzeichnet, daß aus einer Reaktionsgasmischung abgeschieden wird, die ein fluorhaltiges Molekülgas und je anderem Dotierstoff ein weiteres Molekülgas enthält, wobei die Konzentration eines weiteren Molekülgases oder das Mischungsverhältnis oder die Zusammensetzung der weiteren Molekülgase schichtweise verändert wird.

6. Verfahren nach Anspruch 5, dadurch gekennzeichnet, daß das fluorhaltige Molekülgas ein Gas oder Gasgemisch ist, das außer Fluor nur Elemente enthält, die selbst oder deren Oxide keine wesentliche Neigung zur Lösung in Glas haben.

7. Verfahren nach Anspruch 6, dadurch gekennzeichnet, daß das fluorhaltige Molekülgas ein oder sehrere Schwefelfluorverbindungen, Fluorkohlenwasserstoffe und/oder Stickstofffluorverbindungen enthält.

8. Verfahren nach Anspruch 7, dadurch gekennzeichnet, daß das fluorhaltige Molekülgas ein oder mehrere Schwefelfluoride, Stickstofffluoride, Fluorhalogenkohlenwasserstoffe und/oder Karbonylfluorid enthält.

9. Verfahren nach Anspruch 8, dadurch gekennzeichnet, daß Schwefelhexafluorid ($SF_6$) als fluorhaltiges Molekülgas verwendet wird.

10. Verfahren nach Anspruch 5, dadurch gekennzeichnet, daß als fluorhaltiges Molekülgas ein Gas oder Gasgemisch verwendet wird, das neben Fluor auch ein Element enthält, dessen Oxid gut im Glas löslich ist.

11. Verfahren nach Anspruch 10, dadurch gekennzeichnet, daß das Gas oder Gasgemisch aus Siliziumtetrafluorid, Bortrifluorid und/oder Phosphorpentafluorid besteht.

12. Verfahren zum Erzeugen einer Vorform aus Glas zum Ziehen von Lichtleitfasern für die Nachrichtentechnik durch Kollabieren eines Glasrohres zum Stab, nachdem auf der Innenfläche des Rohres eine oder mehrere Glasschichten abgeschieden worden sind, wobei man das Abscheiden der Glasschichten nach einem Verfahren gemäß einem der Ansprüche 1 bis 11 durchführt, dadurch gekennzeichnet, daß man das Kollabieren in Gegenwart von Schwefelhexafluorid vornimmt, mit dem die Innenfläche des Glasrohres während des Kollabierens umspült wird, und das reinigend und ätzend auf das Glas einwirkt.

13. Verfahren nach Anspruch 12, dadurch gekennzeichnet, daß man das Abscheiden der Glasschichten nach einem Verfahren gemäß der Kombination aus den Ansprüchen 1, 3, 5 und 9 durchführt.

**Claims**

1. A process for the production of glass having a predetermined refractive index profile in the form of a gradient profile, wherein the profile is produced in that one or more glass layers is or are deposited from the gas phase onto a body by initiating a thermal reaction, wherein each of the glass layers which together determine the gradient profile is doped with a dopant which determines the refractive index of that layer, wherein the doping is determined layer by layer in such manner that the refractive index gradually changes from layer to layer in accordance with the gradient profile, and wherein fluorine is used as dopant, characterised in that each of the layers which together determine the gradient profile is doped with fluorine and with at least one other dopant and that only the doping with the other dopant varies, whilst the doping with fluorine is maintained constant for all the layers.

2. A process as claimed in Claim 1, characterised in that the glass layers are deposited in the form of layers of alkali-free quartz glass which are doped with fluorine and with one or more other dopants.

3. A process as claimed in Claim 2, characterised in that the deposited quartz glass layers are doped only with germanium and fluorine.

4. A process as claimed in Claim 2, characterised in that one or each deposited quartz glass layer is doped with Ge, Al, Ti, Ta, Sn, Nb, Zr, Yb; La, P, B and/or Sb and fluorine.

5. A process as claimed in one of the preceding Claims, characterised in that the deposition is carried out from a reaction gas mixture which contains a fluorine-containing molecular gas, and a further molecular gas for each other dopant, the concentration of a further molecular gas. or the mixing ratio or composition of the further molecular gases, is varied from layer to layer.

6. A process as claimed in Claim 5. characterised in that the fluorine-containing molecular gas is a gas or gas mixture which, in addition to fluorine, contains only elements which for themselves, or their oxides, have no appreciable tendency to dissolve in glass.

7. A process as claimed in Claim 6, characterised in that the fluorine-containing molecular gas contains one or more sulphur-fluorine compounds, fluoro hydrocarbons and/or nitrogen-fluorine compounds.

8. A process as claimed in Claim 7, characterised in that the fluorine-containing molecular gas contains one or more of sulphur fluorides, nitrogen fluorides, fluoro-halogen hydrocarbons and/or carbonyl fluoride.

9. A process as claimed in Claim 8, characterised in that sulphur hexafluoride (SF$_6$) is used as fluorine-containing molecular gas.

10. A process as claimed in Claim 5, characterised in that the fluorine-containing molecular gas consists of a gas or gas mixture which, in addition to fluorine, also contains an element whose oxide is easily soluble in glass.

11. A process as claimed in Claim 10, characterised in that the gas or gas mixture consists of silicon tetrafluoride, borontrifluoride and/or phosphoruspentafluoride.

12. A process for the production of a glass preform for the drawing of light conducting fibres for communications technology by collapsing a glass tube to form the rod after one or more glass layers has or have been deposited on the inner surface of the tube, where the deposition of the glass layers is carried out in accordance with a process claimed in one of the claims 1 to 11, characterised in that the collapsing procedure is carried out in the presence of sulphur hexafluoride with which the inner surface of the glass tube is flushed during the collapsing procedure and which exerts a cleansing and etching influence on the glass.

13. A process as claimed in claim 12, characterised in that the deposition of the glass layers is carried out in accordance with a process corresponding to the combination of claims 1, 3, 5 and 9.

## Revendications

1. Procédé pour fabriquer du verre, dont l'indice de réfraction possède un profil déterminé se présentant sous la forme d'un profil à gradient d'indice, selon lequel pour obtenir le profil, on dépose sur un corps une ou plusieurs couches de verre à partir de la phase gazeuse, en mettant en oeuvre une réaction thermique, auquel cas chacune des couches de verre qui déterminent en commun le profil à gradient d'indice, est dopée par une substance dopante déterminant l'indice de réfraction de la couche, le dopage étant déterminé couche par couche de telle sorte que d'une couche à l'autre l'indice de réfraction varie progressivement conformément au profil à gradient d'indice, et selon lequel on effectue le dopage avec du fluor, caractérisé par le fait que chacune des couches, qui déterminent en commun le profil à gradient d'indice, est dopée par du fluor et par au moins une autre substance dopante, et que seul le dopage effectué avec l'autre substance dopante est modifié, tandis que le dopage effectué avec le fluor est maintenu constant pour toutes les couches.

2. Procédé suivant la revendication 1, caractérisé par le fait qu'on dépose les couches de verre sous la forme de couches formées d'un verre exempt d'alcali et qui sont dopées par du fluor et par une ou plusieurs autres substances dopantes.

3. Procédé suivant la revendication 2, caractérisé par le fait que les couches (12) en verre quartzeux déposées sont dopées uniquement avec du germanium et du fluor.

4. Procédé suivant la revendication 2, caractérisé par le fait qu'une ou chaque couche de verre quartzeux déposée est dopée avec du Ge, du Al, du Tu, du Ta, du Sn, du Nb, du Zr, du Yb, du La, du P, du B et/ou du Sb et avec du fluor.

5. Procédé suivant l'une des revendications précédentes, caractérisé par le fait qu'on effectue le dépôt à partir d'un mélange gazeux réactionnel, qui contient un gaz moléculaire contenant du fluor et, pour chaque autre substance dopante, un autre gaz moléculaire, la concentration de l'autre gaz moléculaire ou le rapport du mélange ou la composition des autres gaz moléculaires étant modifié couche par couche.

6. Procédé suivant la revendication 5, caractérisé par le fait que le gaz moléculaire contenant du fluor est un gaz ou un mélange de gaz qui contient, endehors du fluor, uniquement des éléments qui eux-mêmes ou dont les oxydes ne possèdent aucune tendance notable à se dissoudre dans le verre.

7. Procédé suivant la revendication 1, caractérisé par le fait que le gaz moléculaire contenant du fluor contient un ou plusieurs composés soufrés et fluorés, hydrocarbures fluorés et/ou composés azotés et fluorés.

8. Procédé suivant la revendication 7, caractérisé par le fait que le gaz moléculaire contenant du fluor contient un ou plusieurs fluorures de soufre, fluorures d'azote, hydrocarbures du fluor et d'un halogène, et/ou un fluorure de carbonyle.

9. Procédé suivant la revendication 8, caractérisé par le fait qu'on utilise de l'hexafluorure de soufre (SP$_6$) en tant que gaz moléculaire contenant du fluor.

10. Procédé suivant la revendication 5, caractérisé par le fait qu'on utilise comme gaz moléculaire contenant du fluor un gaz ou un mélange gazeux qui, outre le fluor, contient également un élément dont l'oxyde est bien soluble dans le verre.

11. Procédé suivant la revendication 10, caractérisé par le fait que le gaz ou le mélange gazeux est constitué par du tétrafluorure de silicium, du trifluorure de bore et/ou du pentafluorure de phosphore.

12. Procédé pour réaliser une préforme en verre en vue de l'étirage de fibres optiques pour la technique de transmission des informations, par aplatissement d'un tube de verre de manière à former un barreau, après le dépôt d'une ou de plusieurs couches de verre sur la surface intérieure du tube, auquel cas on effectue le dépôt des couches de verre conformément au procédé suivant l'une des revendications 1 à 11, caractérisé par le fait qu'on effectue l'aplatissement en présence d'hexafluorure de soufre, avec lequel on balaye la surface intérieure du tube de verre pendant l'aplatissement et qui a un effet nettoyant et corrosif sur le verre.

13. Procédé suivant la revendication 12, caractérisé par le fait qu'on exécute le dépôt des couches de verre conformément à un procédé correspondant à la combinaison des revendications 1, 3, 5 et 9.